# FASCICULE DE BREVET EUROPEEN

(11) **EP 3 612 063 B1**
(45) Date de publication et mention de la délivrance du brevet: **11.05.2022**
(21) Numéro de dépôt: 18711387.3
(22) Date de dépôt: 19.02.2018
(51) Int. Cl.: A47J 39/00

(54) **MEUBLE À ENCEINTES POUR LE MAINTIEN DE PRODUITS ALIMENTAIRES À TEMPÉRATURE CHAUDE**
SCHRANK MIT GEHÄUSEN ZUM HALTEN VON LEBENSMITTELN BEI WARMEN TEMPERATUREN
CABINET WITH ENCLOSURES FOR KEEPING FOOD PRODUCTS AT A HOT TEMPERATURE

(30) Priorité: 18.04.2017 FR 1753354
(43) Date de publication de la demande: 26.02.2020
(73) Titulaire: Rotisol, 77500 Chelles (FR)
(72) Inventeur: WITTIG, Franck, 94130 Nogent-sur-Marne (FR)
(74) Mandataire: Ipsilon
(86) Numéro de dépôt international: PCT/FR2018/050383
(87) Numéro de publication internationale: WO 2018/193172

(56) Documents cités:
- WO-A1-03/094684
- FR-A1- 2 850 261
- US-A- 5 771 789

## Description

### DOMAINE DE L'INVENTION

L'invention concerne un meuble à enceintes pour le maintien de produits alimentaires à température chaude. Plus particulièrement, l'invention concerne un meuble à enceintes pour le maintien de produits alimentaires, tels que des volailles cuites ou des plats préparés, à une température comprise entre 63° C et 70° C au cœur des produits, quel que soit leur emplacement sur une étagère de l'enceinte. En effet, en dessous de 63° C il y a un risque pathogène et au-dessus de 70° C il y a re-cuisson des produits. Les produits alimentaires sont disposés sous emballage et accessibles en libre service dans le meuble qui comporte une face avant accessible, ouverte ou ouvrable.

### ART ANTÉRIEUR

Le document EP 2 916 692 décrit une enceinte à façade ouverte pour la conservation d'aliments à température chaude, à parois thermiquement isolantes, dont la face arrière comporte un panneau amovible portant un mécanisme réglable pour fixer la température dans l'espace intérieur.

Le document EP 3 048 931 décrit une vitrine à plusieurs enceintes pour l'exposition et la conservation d'aliments, chaque enceinte comportant un dispositif de contrôle de température, réglable en fonction de la nature de l'aliment à conserver, et de la durée du maintien à température.

Le document FR 2 850 261 décrit une enceinte pour la conservation d'aliments à température chaude, dans des bacs suspendus. Sous chaque bac est prévue une cuve d'eau chauffée. Derrière chaque cuve est prévu un ventilateur qui souffle de l'air chaud sous le bac et sur la cuve pour que l'air soit saturé de vapeur d'eau.

Le document WO 03/094684 décrit une enceinte recevant un bac de produit alimentaire à distribuer. Sous le bac sont disposés un moyen de chauffage, des moyens de ventilation et une cuve d'eau.

Le document US 5 771 789 décrit une enceinte pour la conservation d'aliments à température chaude sur plaque chauffée. Une circulation d'air est assurée entre l'arrière et l'avant de l'enceinte au moyen d'un ventilateur et d'une canalisation qui libère l'air à l'avant de l'enceinte. Une humidification de l'air est assurée par pulvérisation d'eau.

Le réglage de la température dans les vitrines de libre service est réalisé en général au moyen d'une sonde thermostatique positionnée dans l'enceinte de présentation des aliments, ou près des résistances de chauffage.

Le chauffage d'une enceinte de vitrine de libre service est usuellement assuré au moyen de résistances électriques rayonnantes et/ou de lampes d'éclairage chauffantes placées au-dessus d'une étagère d'exposition des produits alimentaires. Le positionnement des organes de chauffage est assuré pour ne pas présenter de difficulté pour la mise en place et la saisie des aliments sur l'étagère, et de risque pour les personnes intervenant dans ces opérations. Il en résulte une répartition non homogène du chauffage.

Un autre moyen de chauffage utilisé pour les vitrines de libre service est constitué par un ventilateur dont le flux d'air axial est envoyé sur des résistances chauffantes puis sur les aliments. Cette disposition n'assure pas une homogénéité de la température dans la vitrine et risque de rendre impropre à la consommation des produits alimentaires non maintenus à la température requise.

### BUT ET RÉSUMÉ

La présente invention a pour but d'éviter les inconvénients précités en assurant une homogénéité de la température dans l'enceinte et le maintien de la température entre les limites de 63° C et 70° C dans des conditions optimales de consommation d'énergie, c'est-à-dire, par exemple, sous la tension nominale de 230 V accessible en tout emplacement d'un magasin, ou, pour des vitrines de grande capacité, sous une tension de 400 V triphasée.

L'invention a pour objet un meuble à enceintes pour le maintien de produits alimentaires à température chaude, dans lequel chaque enceinte est définie par deux parois latérales, une paroi de fond, une face avant ouverte ou ouvrable, une paroi supérieure et une étagère inférieure, caractérisé en ce que chaque enceinte comporte, sur toute sa largeur :
- à l'extérieur et derrière l'étagère inférieure, une turbine cylindrique pour la circulation d'air ;
- au bas de la paroi de fond, des ouïes pour le passage de l'air depuis l'intérieur de l'enceinte vers la turbine cylindrique ;
- dans l'étagère inférieure, entre une face supérieure portant les produits alimentaires et une face inférieure, un espace de passage de l'air entre la turbine cylindrique et une trappe avant ouverte vers l'intérieur de l'enceinte ; et
- dans l'espace de passage de l'air, des éléments chauffants, répartis sur toute la surface de l'étagère, assurant le chauffage de la face supérieure de l'étagère, et de l'air pulsé par la turbine cylindrique.

Avantageusement, la trappe avant ouverte vers l'intérieur de l'enceinte est bordée vers l'avant par un volet assurant le renvoi de l'air circulant dans l'étagère, vers le haut et vers l'intérieur de l'enceinte.

Selon un mode de réalisation, la face avant de l'enceinte est pourvue d'une porte basculante.

### BRÈVE DESCRIPTION DES DESSINS

L'invention est décrite ci-après avec référence aux dessins annexés dans lesquels :
- La figure 1 est une vue de côté d'un exemple de réalisation d'un meuble à enceintes pour le maintien de produits alimentaires à température chaude ;
- La figure 2 est une vue de côté d'une enceinte de la figure 1 ;
- La figure 3 est une vue en perspective d'une enceinte de la figure 1 montrant la circulation du flux d'air ;
- La figure 4 est une vue analogue à la figure 3, en l'absence de produits alimentaires, pour montrer l'espace de passage de l'air dans l'étagère ;
- La figure 5 est une vue de côté d'une enceinte de la figure 1 montrant le passage du flux d'air dans l'étagère inférieure ;
- La figure 6 est une vue en perspective de l'arrière d'une enceinte de la figure 1 ;
- La figure 7 est une vue en perspective d'une étagère du meuble de la figure 1, la face supérieure ayant été enlevée.

### DESCRIPTION DÉTAILLÉE

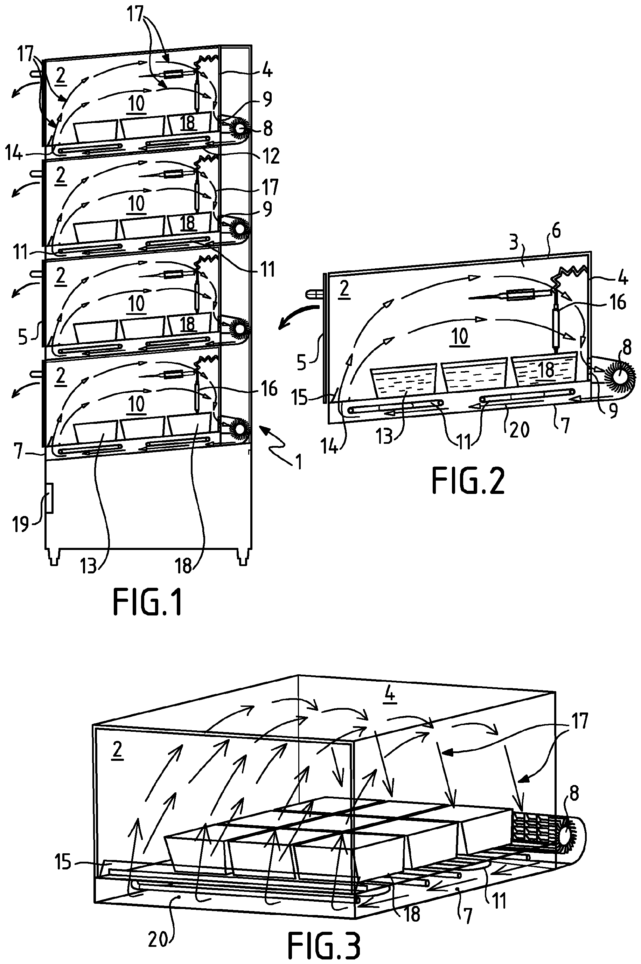

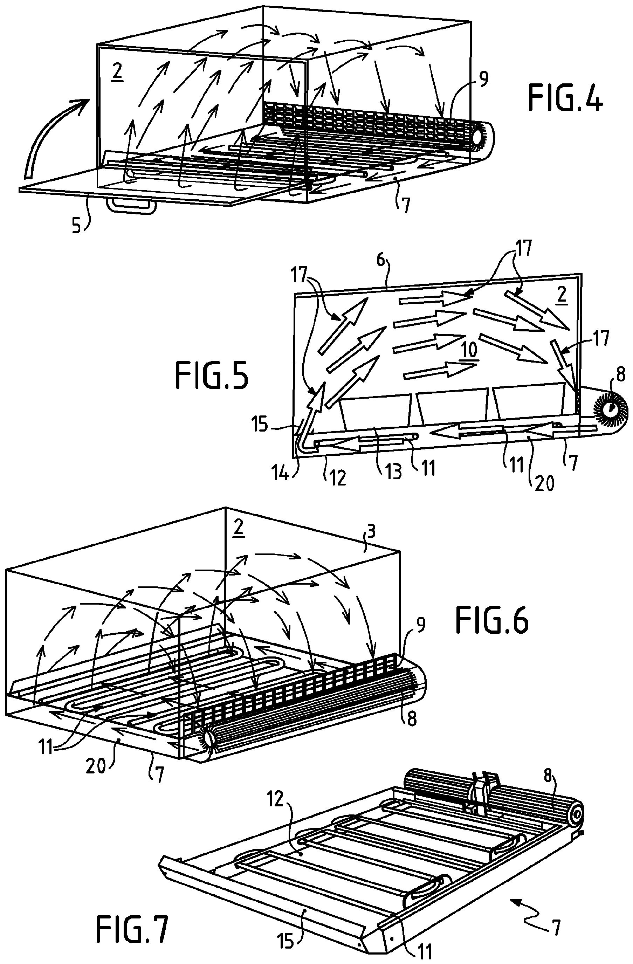

Le meuble 1 à enceintes 2 pour le maintien de produits alimentaires à température chaude, comporte plusieurs enceintes 2 superposées (figure 1). Chaque enceinte 2 comporte deux parois latérales 3, une paroi de fond 4, une face avant 5 ouverte ou ouvrable, une paroi supérieure 6 et une étagère inférieure 7. Derrière l'étagère inférieure 7 (figure 2) est disposée une turbine cylindrique 8 dont la longueur correspond à la largeur de l'étagère 7, c'est-à-dire à la largeur de l'enceinte 2. La paroi de fond 4 de l'enceinte 2 présente à sa partie inférieure des ouïes 9 disposées sur toute la largeur de l'enceinte 2 (figure 6).

L'étagère inférieure 7 présente une face inférieure 12, une face supérieure 13, et entre les deux faces un espace 20 de passage de l'air qui circule de l'arrière vers l'avant de l'étagère 7 sous l'action de la turbine cylindrique 8. Dans cet espace 20 de passage de l'air sont disposés des éléments chauffants 11, qui sont par exemple des résistances électriques blindées en épingle, et qui sont répartis sur toute la surface de l'étagère, de l'arrière vers l'avant (figure 7).

Près de la face avant 5 de l'enceinte 2, la face supérieure 13 de l'étagère présente une trappe 14 (figure 2) qui s'étend sur toute la largeur de l'étagère, et qui est bordée vers l'avant par un volet 15 assurant le renvoi du flux d'air, circulant dans l'étagère 7, vers le haut et vers l'intérieur de l'enceinte 2 (figure 3). La présence de ce volet 15 assure que l'ensemble du flux d'air chaud, symbolisé par les flèches 17, circule de l'avant vers l'arrière dans l'enceinte 2, en enveloppant l'ensemble 10 des produits à maintenir à température chaude. Le flux d'air est repris à travers les ouïes 9 par la turbine cylindrique 8. Du fait que la turbine cylindrique 8 a une longueur sensiblement égale à la largeur de l'enceinte 2, le flux d'air circule, dans l'étagère et dans l'enceinte, pratiquement sans turbulence transversale. Le flux d'air balaie avec régularité toute la largeur de l'enceinte, de l'avant vers l'arrière, avec très peu d'échange avec l'extérieur de l'enceinte 2. Il est avantageux, pour réaliser une économie énergétique, de disposer sur la face avant 5 de l'enceinte une porte basculante, ouvrable à la demande (figure 4).

Dans le meuble à enceintes selon l'invention, la température au cœur des produits alimentaires maintenus à température chaude, doit être comprise entre 63° C et 70° C. Pour assurer le contrôle de cette température, une sonde thermostatique 16 est positionnée dans l'enceinte 2, piquée ou non dans les produits. Elle peut être également positionnée dans le flux d'air à la sortie de la trappe 14. Sa température de seuil est régulée par un circuit électronique 19 installé dans le meuble 1, par exemple à la base du meuble (figure 1) ou dans un bandeau supérieur (non représenté). Les éléments chauffants 11 de l'étagère inférieure 7 assurent d'une part le chauffage nécessaire pour la face supérieure 13 de l'étagère 7, qui est au contact des produits alimentaires 18, d'autre part le chauffage du flux d'air circulant dans l'enceinte 2 sous l'action de la turbine cylindrique 8. Le circuit électronique de commande 19 permet de contrôler la température nominale de chaque enceinte du meuble dans des gammes de valeurs distinctes.

## Revendications

1. Meuble à enceintes pour le maintien de produits alimentaires à température chaude, dans lequel chaque enceinte (2) est définie par deux parois latérales (3), une paroi de fond (4), une face avant (5) ouverte ou ouvrable, une paroi supérieure (6) et une étagère inférieure (7), chaque enceinte comportant :
- au bas de la paroi de fond (4), des ouïes (9) pour le passage de l'air depuis l'intérieur de l'enceinte ;
- dans l'étagère inférieure (7), entre une face supérieure (13) portant les produits alimentaires (18) et une face inférieure (12), un espace (20) de passage de l'air vers une trappe (14) avant ouverte vers l'intérieur de l'enceinte (2) ; et
- dans l'espace (20) de passage de l'air, des éléments chauffants (11), répartis sur toute la surface de l'étagère (7), assurant le chauffage de la face supérieure (13) de l'étagère, **caractérisé en ce que** chaque enceinte comporte, sur toute sa largeur, à l'extérieur et derrière l'étagère inférieure (7), une turbine cylindrique (8) pour la circulation de l'air depuis l'intérieur de l'enceinte vers la turbine cylindrique (8) et depuis la turbine cylindrique (8) vers la trappe (14) avant, les éléments chauffants (11) assurant le chauffage de l'air pulsé par la turbine cylindrique (8).

2. Meuble selon la revendication 1 **caractérisé en ce que** la trappe (14) avant ouverte vers l'intérieur de l'enceinte (2) est bordée vers l'avant par un volet (15) assurant le renvoi de l'air circulant dans l'étagère (7), vers le haut et vers l'intérieur de l'enceinte (2).

3. Meuble selon la revendication 1 **caractérisé en ce que** la face avant (5) de l'enceinte (2) est pourvue d'une porte basculante.

## Patentansprüche

1. Schrank mit Gehäusen zum Halten von Lebensmitteln bei warmer Temperatur, wobei jedes Gehäuse (2) von zwei Seitenwänden (3), einer Rückwand (4), einer offenen oder öffenbaren vorderen Fläche (5), einer oberen Wand (6) und einem unteren Regalbrett (7) definiert ist, wobei jedes Gehäuse aufweist:
- im unteren Teil der Rückwand (4) Öffnungen (9) für den Durchgang der Luft aus dem Inneren des Gehäuses;
- in dem unteren Regalbrett (7) zwischen einer oberen Fläche (13), die die Lebensmittel (18) trägt, und einer unteren Fläche (12) einen Raum (20) für den Durchgang der Luft in Richtung einer zum Inneren des Gehäuses (2) offenen vorderen Luke (14); und
- im Luftdurchgangsraum (20) Heizelemente (11), die über die gesamte Oberfläche des Regalbretts (7) verteilt sind, die das Heizen der oberen Fläche (13) des Regalbretts sichern, **dadurch gekennzeichnet, dass** jedes Gehäuse über seine gesamte Breite außerhalb und hinter dem unteren Regalbrett (7) eine zylindrische Turbine (8) für die Zirkulation der Luft aus dem Inneren des Gehäuses zu der zylindrischen Turbine (8) und von der zylindrischen Turbine (8) zu der vorderen Luke (14) aufweist, wobei die Heizelemente (11) das Heizen der von der zylindrischen Turbine (8) gepulsten Luft sichern.

2. Schrank nach Anspruch 1, **dadurch gekennzeichnet, dass** die vordere, zum Inneren des Gehäuses (2) offene Luke (14) nach vorn von einem Flügel (15) gesäumt ist, der die Rückführung der im Regelbrett (7) zirkulierenden Luft nach oben und in das Innere des Gehäuses (2) sichert.

3. Schrank nach Anspruch 1, **dadurch gekennzeichnet, dass** die vordere Fläche (5) des Gehäuses (2) mit einer Klapptür versehen ist.

## Claims

1. A cabinet with enclosures for keeping food products at a hot temperature, wherein each enclosure (2) is defined by two side walls (3), a back wall (4), an open or openable front face (5), a top wall (6) and a bottom shelf (7), each enclosure including:
- at the bottom of the back wall (4), louvers (9) for the passage of air from the inside of the enclosure;
- in the bottom shelf (7), between a top face (13) bearing the food products (18) and a bottom face (12), a passage space (20) for the air to pass toward a front hatch (14) open toward the inside of the enclosure (2); and
- in the air passage space (20), heating elements (11), distributed over the entire surface of the shelf (7), ensuring the heating of the top face (13) of the shelf, **characterized in that** each enclosure includes, over its entire width, on the outside of and behind the bottom shelf (7), a cylindrical turbine (8) for circulating air from the inside of the enclosure toward the cylindrical turbine (8) and from the cylindrical turbine (8) toward the front hatch (14), the heating elements (11) ensuring the heating of the pulsed air by the cylindrical turbine (8).

2. The cabinet according to claim 1, **characterized in that** the front hatch (14) open toward the inside of the enclosure (2) is bordered toward the front by a flap (15) ensuring the return of the air circulating in the shelf (7), upward and toward the inside of the enclosure (2).

3. The cabinet according to claim 1, **characterized in that** the front face (5) of the enclosure (2) is provided with a swinging door.
